Europäisches Patentamt

(19) European Patent Office

Office européen des brevets

(11) Publication number: **0 214 334**

**A1**

(12) **EUROPEAN PATENT APPLICATION**

(21) Application number: 85111527.9

(22) Date of filing: 12.09.85

(51) Int. Cl.⁴: **C04B 35/48**

(43) Date of publication of application:
18.03.87 Bulletin 87/12

(84) Designated Contracting States:
**DE FR IT SE**

(71) Applicant: **Axia Incorporated**
**122 West 22nd Street**
**Oak Brook Illinois 60521(US)**

(72) Inventor: **Reed, Larry Thomas**
**631 Williams Way**
**Richardson Dallas Texas 75080(US)**

(74) Representative: **UEXKÜLL & STOLBERG**
**Patentanwälte**
**Beselerstrasse 4**
**D-2000 Hamburg 52(DE)**

(54) Zirconium oxide ceramic containing ferric oxide.

㊼ A zirconium oxide ceramic suitable for use as an electrolyte which contains a zirconium oxide, a stabilizing oxide (such as, yttrium oxide, ytterbium oxide or calcium oxide), aluminum oxide and ferric oxide in an amount from about 0.9 to about 5 volume % by volume of aluminum oxide present. A preferred composition being from about 67.5 to about 75 volume % zirconium oxide by total volume, aluminum oxide in the range of about 10 to about 14.9 volume % by volume of the total volume; yttrium oxide in the range of about 19.5 to about 25 volume % by volume of the zirconium oxide, and ferric oxide in an amount from about 0.9 to about 5 volume % by volume of aluminum oxide.

EP 0 214 334 A1

1        **0 214 334**        2

## ZIRCONIUM OXIDE CERAMIC CONTAINING FERRIC OXIDE

### TECHNICAL FIELD

This invention relates to a composition and method of making a thermostabilized zirconium oxide ceramic which contains aluminum oxide and ferric oxide. In particular, the present invention relates to the utilization of ferric ($Fe_2O_3$) oxide in combination with aluminum oxide to achieve improved strength while reducing the amount of aluminum oxide required heretofore.

### BACKGROUND ART

Zirconium oxide ($ZrO_2$) ceramics have been utilized as a fixed electrolyte in measuring devices for determining the oxygen content of exhaust gases. One major use has been in the analysis of the exhaust gas of internal combustion engines. Thus, these ceramics are subjected to a wide range of ambient temperatures to which the engines are exposed and temperatures produced by the exhaust gases. Thus the temperature can range from ambient to above 1000°C.

As is known, zirconium oxide ($ZrO_2$) has three different solid crystal modifications which are: the cubic high temperature structure, a tetragonal structure at intermediate temperatures, and a monoclinic structure stable at lower temperatures. If the $ZrO_2$ is not stabilized, the crystal structure changes through temperature ranges, thereby changing in volume which can produce cracks and fractures in molded parts made from zirconium oxide. As is disclosed in British patent 1,591,781 it has been commonplace to stabilize the cubic high temperature structure partially or wholly with stabilizing oxides such as calcium oxide, yttrium oxide ($Y_2O_3$) and ytterbium oxide ($Yb_2O_3$). further sintering adjuvants have been added to improve strength. These include aluminum oxide or aluminum oxide compounds and silicon oxide to increase strength of the zirconium oxide ceramic. Silicon oxide has a drawback in that it impairs high temperature stability. British patent 1,591,781 discloses the use of aluminum oxide from 15% to 50% by volume of total volume. While high percentages of aluminum oxide are desirable for strength, the oxygen ion conductance of the zirconium oxide is reduced as the aluminum oxide ($Al_2O_3$) content increases. This reduction in conductance is not desirable.

Thus, there has been a continuing need to reduce the aluminum oxide content without significant loss of strength. The present invention increases the strength of the zirconium oxide ceramic by the addition of ferric ($Fe_2O_3$) oxide with the aluminum oxide, permitting a reduction aluminum oxide content.

### SUMMARY OF THE INVENTION

In one aspect the present invention relates to the utilization of from about 0.9% to about 5 volume % ferric oxide ($Fe_2O_3$) by volume of the aluminum oxide ($Al_2O_3$) present in a stabilized zirconium oxide ceramic, and preferably from about 2% to about 5 volume % ferric oxide by volume of the $Al_2O_3$. The stabilized zirconium oxide ceramic can be stabilized by a stabilizing oxide such as yttrium oxide ytterbium oxide, or calcium oxide.

In another aspect the present invention relates to the preferred embodiment in which the ceramic is comprised of from about 67.5% to about 75% by volume zirconium oxide based on the total volume; from about 10% to about 14.9% aluminum oxide by volume base on total volume; from about 19.5% to 22 volume % of a stabilizing oxide based on the volume of $Zr_2O$; and from about 0.9% to about 5% by volume of $Fe_2O_3$ based on the volume of aluminum oxide. The stabilizing oxide is preferably yttrium oxide.

### DETAILED DESCRIPTION

The present invention resulted from the discovery that by incorporating ferric oxide in the range from about 0.9% to about 5% by volume of aluminum oxide in a zirconium oxide ceramic that the strength of the ceramic is improved, thus permitting reduction in the amount of aluminum oxide utilized. Thus, the ferric oxide can be added to known compositions for zirconium ceramics to improve strength. However, in the preferred embodiment a novel composition for the zirconium oxide ceramic is provided. In this composition zirconium oxide accounts for about 67.5% to about 75% by volume of total volume; aluminum oxide is utilized in an amount from about 10% to about 14.9% by volume based on the total volume; a stabilizing oxide is incorporated in an amount from about 19.5% to about 25% by volume of zirconium oxide, and ferric oxide is added in the range of from about 0.9% to about 5% by volume of the $Al_2O_3$ present. The stabilizing oxide is selected from the group $Y_2O_3$, $Yb_2O_3$, or CaO. Yttrium oxide is the preferred stabilizing oxide because it allows for a

2

higher output voltage. No matter which stabilizing oxide is used, it is preferable to use at least an amount sufficient to fully stabilize the zirconium oxide in the cubic state.

The stabilized zirconium oxide ceramic in a more preferred embodiment contains zirconium oxide from about 69 to about 72 volume % based on total volume; aluminum oxide from about 14 to 14.9 volume % based on total volume; ferric oxide from about 2 to 5 volume % based on the volume of aluminum oxide; and a stabilizing oxide from about 19.5 to 22 volume % based on the volume of zirconium oxide.

The ceramic can be prepared in the following manner. It is preferred to pregrind the aluminum oxide and ferric oxide to a fineness of less than 1 micrometer ($\mu$m). The zirconium oxide, yttrium oxide are preferably preground to a fineness of less than 1 micrometer. The preground zirconium oxide, yttrium oxide, aluminum oxide and ferric oxide are combined, mixed or ground together to a fineness of less than 1 micrometer. Pregrinding of the aluminum oxide with ferric oxide and zirconium oxide with yttrium oxide is not necessary, but is preferred to assure a homogeneous mixture.

After the components are ground to the desired fineness and thoroughly admixed, they are mixed with organic binders. The organic binders are preferably used in a concentration less than 3% by weight of the combined components. Suitable organic and binders are known to the industry.

The admixture of organic binders and the ceramic components is molded to a desired shape. Molding may be done in any manner known in the art. Preferably the molding process is an isostatic process. Other molding techniques can be employed. To complete the molding step the molded ceramic is sintered in an oxidizing atmosphere at a temperature between 1400°C and 3000°C.

The composition of the present invention typically will include impurities. These impurities can be one or more of the following: $HfO_2$, MgO, MaO, $NaOS_2$ $TiO_2$ $SO_3$, and $B_2O_3$. It is preferable that such impurities are eliminated. However, in practice some impurities will be present and it is desirable to keep their content to a minimum. Preferably, impurity levels should be held to less than 1.5%.

It is desirable that silicon oxide ($SiO_2$) not be used in the composition of the present invention, because silicon oxide has a tendency to migrate to the outside of the ceramic upon sintering. This tends to reduce the effectiveness of the ceramic as an electrolyte. Further, silicon oxide has been found to reduce the adhesion of metal films later applied to the ceramic. Such metal films are described in U.S. Patent 4,493,746. An oxygen sensor device utilizing $Zr_3O$ ceramics is described in U.S. Patent 4,526,672. Both of the aforesaid patents are hereby incorporated by reference.

After the ceramic has been coated with a suitable metallic coating, such as a platinum coating, the platinum coating may be spinelled as is known in the art.

Example

A zirconium oxide ceramic suitable for use as an electrolyte could be made by combining aluminum oxide, ferric oxide, yttrium oxide and zirconium oxide. It would be expected that by combining about 14.9% by volume aluminum oxide based on total volume, about 5% ferric oxide by volume of aluminum oxide, about 70.5% volume zirconium oxide based on by total volume and, about 19.64% yttrium oxide by volume of zirconium oxide would produce an electrolyte having suitable strength characteristics. It would be expected that the composition would include some minor amount of impurities.

After the product is molded and sintered, the resulting ceramic would be expected to have a density of approximately 5.2 grams/cc, a flexural strength of above about 190 MPa minute at 25°C; a modulus of elasticity of above about 170 GPa minute, and a Poisson's ration of about 0.20.

While this invention has been described in relation to its preferred embodiments, it is to be understood that various modifications thereof will be apparent to those of ordinary skill in the art upon reading the specification and it is intended to cover all such modifications as fall within the scope of the appended claims.

**Claims**

1. A sintered zirconium oxide ceramic comprising from about 67.5 to about 75 volume % zirconium oxide by total volume; aluminum oxide from about 10 to about 14.9 volume % by total volume; a stabilizing oxide from about 19.5 to about 25 volume % by volume of zirconium oxide; and ferric oxide in the range of from about 0.9 to about 5 volume % based on the volume of aluminum oxide.

2. The sintered zirconium oxide ceramic of Claim 1 wherein said zirconium oxide is present from about 69 to about 72 volume % by total volume; said aluminum oxide is present in an amount from about 14 to about 14.9 volume % based on total volume of the composition; said ferric oxide is present in an amount from about 2 to about 5 volumes % by volume of aluminum oxide and from about 19.5 to 22 volume % stabilizing oxide by volume of zirconium oxide.

3. The zirconium oxide ceramic of Claim 1 wherein said zirconium oxide is about 70.5 volume % of the total volume; said aluminum oxide is about 14.9 volume percent of the total volume; said ferric oxide concentration is about 5 volume % based on the volume of aluminum oxide; and said stabilizing oxide is yttrium oxide and is about 19.64 volume % based on the volume of zirconium oxide.

4. The ceramic of Claim 1 wherein said stabilizing oxide is selected from the group consisting of yttrium oxide, ytterbium oxide, or calcium oxide.

5. The ceramic of Claim 1 wherein said stabilizing oxide is yttrium oxide.

6. The ceramic of Claim 2 wherein said stabilizing oxide is selected from the group consisting of yttrium oxide, ytterbium oxide, or calcium oxide.

7. The ceramic of Claim 2 wherein said stabilizing oxide is yttrium oxide.

8. An improved sintered zirconium oxide ceramic which contains zirconium oxide, a stabilizer oxide other than aluminum oxide, and aluminum oxide the improvement comprising the addition of ferric oxide in the range of about 0.9 to about 5 volume % based on the volume of aluminum oxide.

9. The zirconium oxide ceramic of Claim 8 wherein said ferric oxide is present in an amount from about 2 to about 5% by volume of said aluminum oxide.

10. The sintered zirconium ceramic oxide of Claim 8 wherein said stabilizer oxide is selected from the group consisting of yttrium oxide, ytterbium oxide or calcium oxide.

11. The sintered zirconium ceramic oxide of Claim 9 wherein said stabilizer oxide is selected from the group consisting of yttrium oxide, ytterbium oxide or calcium oxide.

12. The ceramic of Claim 10 wherein said stabilizer oxide is yttrium oxide.

13. The ceramic of Claim 11 wherein said stabilizer oxide is yttrium oxide.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | CHEMICAL ABSTRACTS, vol. 84, no. 8, February 1976, page 618, no. 52731t, Columbus, Ohio, US; S.F. PAL'GUEV et al.: "Physicochemical properties of oxygen-ionic conducting solid electrolytes prepared by different technologies", & REC. INTERSOC. ENERGY CONVERS. ENG. CONF., 10th 1975, 46-7 | 1-7 | C 04 B 35/48 |
| X | Idem | 8-13 | |
| A | CHEMICAL ABSTRACTS, vol. 102, no. 8, February 1985, page 264, no. 66315n, Columbus, Ohio, US; & JP A - 59 174 574 (TDK CORP.) 03-10-1984 | 1-7 | |
| X | Idem | 8-13 | **TECHNICAL FIELDS SEARCHED (Int. Cl.4)** |
| A | AMERICAN CERAMIC SOCIETY BULLETIN, vol. 58, no. 2, February 1979, pages 228-232, Columbus, Ohio, US; R.V. WILHELM, Jr. et al.: "Iron oxide-doped yttria-stabilized zirconia ceramic: iron solubility and electrical conductivity" * Whole document * | 1-13 | C 04 B<br>G 01 N |

--- -/-

The present search report has been drawn up for all claims

| Place of search | Date of completion of the search | Examiner |
|---|---|---|
| THE HAGUE | 26-05-1986 | SCHURMANS H.D.R. |

| | DOCUMENTS CONSIDERED TO BE RELEVANT | | Page 2 |
| --- | --- | --- | --- |
| Category | Citation of document with indication, where appropriate, of relevant passages | Relevant to claim | CLASSIFICATION OF THE APPLICATION (Int. Cl.4) |
| A | JOURNAL OF MATERIALS SCIENCE; vol. 14, no. 1, 1979, pages 59-65, Chapman and Hall Ltd., London, GB; K.C. RADFORD et al.: "Zirconia electrolyte cells. Part 1: sintering studies" * Pages 59-61; page 64, left-hand column * | 1-13 | |
| | --- | | |
| D,A | DE-A-2 810 134 (R. BOSCH GmbH) * Claims 1,4-7,12 * | 1-13 | |
| | ----- | | |
| | | | TECHNICAL FIELDS SEARCHED (Int. Cl.4) |

The present search report has been drawn up for all claims

| Place of search | Date of completion of the search | Examiner |
| --- | --- | --- |
| THE HAGUE | 26-05-1986 | SCHURMANS H.D.R. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82